# EUROPEAN PATENT APPLICATION

(11) **EP 3 482 638 A1**
(43) Date of publication of application: **15.05.2019**
(21) Application number: 17827357.9
(22) Date of filing: 21.06.2017
(51) Int. Cl.: A23G 3/34

(54) **HARD CANDY**

(30) Priority: 11.07.2016 JP 2016136557
(71) Applicant: Morinaga & Co., Ltd., Tokyo 108-8403 (JP)
(72) Inventor: YAMAGUCHI, Takahiro, Yokohama-shi Kanagawa 230-8504 (JP); INOUE, Minako, Yokohama-shi Kanagawa 230-8504 (JP); KERA, Ryosuke, Yokohama-shi Kanagawa 230-8504 (JP)
(74) Representative: Vossius & Partner Patentanwälte Rechtsanwälte mbB
(86) International application number: PCT/JP2017/022851
(87) International publication number: WO 2018/012227

(57) **Abstract**

Provided is a hard candy which has excellent texture and which allows significant reduction in sugars. The hard candy satisfies (A) to (c) : (A) Containing 80% by mass or more of water-soluble dietary fiber per solid content; (B) Containing at least 6% by mass of water; and (C) The glass transition temperature is 20°C or higher.

## Description

### [TECHNICAL FIELD]

The present invention relates to hard candies. The present invention particularly relates to low sugar hard candies.

### [BACKGROUND ART]

Hard candy is one of the typical confectioneries that taste various flavors by being eaten by slowly dissolving in the mouth, typically based on sugar and starch syrup.

In recent years, in the field of hard candy as well, in order to respond to the increase of health consciousness of consumers, products that appeal for the reduction of sugars have been developed. As such a product, a hard candy using a sugar alcohol instead of sugar is known (e.g. Patent Document 1). In addition, a hard candy containing crystalline chestose as a saccharide is known (Patent Document 2).

In addition, a hard candy containing an α-galactooligosaccharide which is not fructosylated as a saccharide is known (Patent Document 3) .

### [PRIOR DOCUMENT]

### [Patent Document]

[Patent Document 1] Japanese Patent Application Laid-Open No. 8-228688
[Patent Document 2] Japanese Patent Application Laid-Open No. 10-000057
[Patent Document 3] Japanese Patent Application Laid-Open No. 2014-520562

### [SUMMARY OF INVENTION]

### [Technical Problem]

When sugar alcohols are used for hard candy as described in Patent Document 1, if an attempt is made to increase the amount of sugar alcohols, problems tend to occur in hardness, hygroscopicity, and demolding from the mold. Therefore, it is difficult to achieve both sufficient caloric reduction and physical properties as a hard candy. In addition, sugar alcohols are components classified as sugars in the first place, and are not useful from the viewpoint of sugar restriction. In addition, since sugar alcohol has a laxative action, it is necessary to pay attention to the intake.

Although the hard candy described in Patent Documents 2 and 3 has an appropriate hardness as a hard candy, the texture including deformation in the mouth, sticking to teeth, and the like is not good.

Meanwhile, in recent years, alimentotherapy and diet by sugar restriction have been recommended.

The Food Labeling Standards in the Food Labeling Law, which came into force in 2015, stipulate that among carbohydrate, sugars and dietary fiber should be indicated together. In the future, reducing sugars may be an important theme in the confectionary field as well.

It is therefore an object of the present invention to provide a hard candy having excellent texture, in which sugars are greatly reduced.

### [Solution to Problem]

The present inventors have found that by setting the content of water-soluble dietary fiber per solid content and the water content to be equal to or higher than a certain value and setting the glass transition point to be equal to or higher than a certain value, it is possible to provide a hard candy having a considerably reduced sugar content and excellent texture, and have completed the present invention.

That is, the present invention for solving the above-mentioned problems is a hard candy satisfying the following (A) to (C).
(A) It contains 80% by mass or more of water-soluble dietary fiber per solid content.
(B) It contains 6% by mass or more of water.
(C) The glass transition temperature is 20°C or higher.

The hard candy satisfying (A) to (C) has a good texture as a hard candy while the sugars is reduced.

In a preferred embodiment of the invention, the water-soluble dietary fiber comprises at least one member selected from inulin, polydextrose, and resistant dextrins.

By using a water-soluble dietary fiber selected from these, it is possible to improve the texture and improve the stability.

In a preferred embodiment of the invention, inulin is included as a water-soluble dietary fiber.

By using inulin, the texture can be improved and the stability can be enhanced.

In a preferred form of the invention, the hardness of the hard candy is more than or equal to 3 kg.

### [Advantage Effects of Invention]

The hard candy of the present invention is compatible with reduction of sugars and good texture. Therefore, according to the present invention, it is possible to provide a hard candy in which sugars that have not been conventionally used are greatly reduced. It can also provide a new value of hard candy that can easily ingest dietary fiber.

In addition, the hard candy of the present invention has good physical properties as a hard candy even though it has more moisture than a typical hard candy, and therefore, it is possible to contain a raw material having high moisture activity. The high moisture content is also advantageous from the standpoint of reducing sugars and energy efficiency in production.

### [DESCRIPTION OF EMBODIMENTS]

Embodiments of the present invention will be described below.

The hard candy of the present invention contains water-soluble dietary fiber as an essential component. Water-soluble dietary fiber refers to water-soluble indigestible carbohydrates that are contained in food and are difficult to digest and absorb by the digestive organs of humans.

Examples of the water-soluble dietary fiber include indigestible polysaccharides such as inulin, indigestible dextrin, polydextrose, agar, sodium alginate, gum arabic, beet fiber, xanthan gum, guar gum, guar gum enzyme decomposition product, indigestible starch, pullulan, and indigestible oligosaccharides such as fructooligosaccharides, galactooligosaccharides, xylooligosaccharides, and gentiooligosaccharides. In the present invention, it is preferable to use at least one selected from inulin, indigestible dextrin, and polydextrose, and in particular, inulin alone or in combination with other water-soluble dietary fibers. Water-soluble dietary fibers in combination with inulin include, but are not limited to, resistant dextrins, polydextrose, and fructooligosaccharides.

The composition of the water-soluble dietary fiber can be determined so that the average molecular weight of the entire water-soluble dietary fiber is preferably 1000 to 4000, more preferably 1200 to 3800, and more preferably 1400 to 3600.

As the water-soluble dietary fiber, it is preferable to use a fiber having an average molecular weight of preferably 1000 to 4000, more preferably 1300 to 3700.

For example, when inulin is used, its average molecular weight is preferably 1000 to 4000, more preferably 1300 to 3700.

When a resistant dextrin is used, its average molecular weight is preferably 1000 to 3000, more preferably 1500 to 2700.

When polydextrose is used, its average molecular weight is preferably 1000 to 2000, more preferably 1300 to 1700.

When a fructooligosaccharide is used, its average molecular weight is preferably 500 to 1000.

In the present description, average molecular weight means weight average molecular weight.

In the present invention, it is preferable that the water-soluble dietary fiber having such an average molecular weight occupies preferably 50% by mass or more, more preferably 70% by mass or more, particularly preferably 80% by mass or more, and especially 90% by mass or more of the total water-soluble dietary fiber.

Preferred embodiments of the composition of the water-soluble dietary fiber include, for example:
(1) An embodiment containing 40% by mass or more, preferably 50% to 95% by mass of inulin having an average molecular weight of 2000 to 4000.
(2) In the embodiment (1), a non-digestible dextrin having an average molecular weight of 1500 to 2700 and/or polydextrose having an average molecular weight of 1000 to 2000 is contained in an amount of 5 to 50% by mass.
(3) In the embodiment (1), a fructooligosaccharide having an average molecular weight of 500 to 1000 is contained in an amount of 30 to 55% by mass.
(4) An embodiment containing 10 to 50% by mass, preferably 20 to 40% by mass, of inulin having an average molecular weight of 1000 to 2000, and 40 to 80% by mass, preferably 50 to 70% by mass, of polydextrose having an average molecular weight of 1000 to 2000.
(5) In the embodiment (4), a non-digestible dextrin having an average molecular weight of 1500 to 2700 is contained in an amount of 3 to 15% by mass.

The content of the water-soluble dietary fiber is 80% by mass or more, preferably 85% by mass or more, more preferably 90% by mass or more, and particularly preferably 95% by mass or more, based on the solid content constituting the hard candy. The hard candy of the present invention can also be composed of water-soluble dietary fiber in the total amount of solids.

The content of the water-soluble dietary fiber in the hard candy may be determined by a method which can distinguish the water-insoluble dietary fiber from the water-soluble dietary fiber, and can include low molecular weight water-soluble dietary fiber, among methods commonly used in food analysis, for example, the CODEX analysis method AOAC Method2001. 03 may be used.

The water content of the hard candy of the present invention is 6% by mass or more, preferably 7% by mass or more. The upper limit is preferably 12% by mass, more preferably 11% by mass.

Moisture can be measured by a conventional method and a normal pressure heating drying aid method.

By setting the moisture in this range, the moisture interacts with the above-mentioned water-soluble dietary fiber, and good texture and stability can be realized.

When the content is 7% by mass or more, the production, in particular, the boiling operation can be easily achieved.

In addition, by setting the water content to be equal to or higher than a certain value, sugars in the entire hard candy is also contributed to be reduced.

The hard candy of the present invention may contain sugars, but the extent is less than 20% by mass, preferably 10% by mass or less, and more preferably 5% by mass or less, based on the solid content. In addition, an embodiment which does not contain sugars is also preferable. Here, the sugars refer to a component of the carbohydrate that is digested by human digestive enzymes, and a component that contains a low molecular weight synthetic sweetener and is other than dietary fiber. In the case of using sugars, sugar or starch syrup can be preferably used.

The content of the sugar alcohol is preferably 10% by mass or less, preferably 5% by mass or less, based on the solid content. In addition, it is particularly preferable not to contain the same.

Hard candies that do not contain sugars can be labeled as "sugars off," "sugars free," etc.

The hard candy of the present invention has a glass transition temperature of 20°C or higher, preferably 22°C or higher, and more preferably 24°C or higher. Such physical properties provide a good texture in terms of shape retention in the mouth and suppression of sticking to teeth. The upper limit of the glass transition temperature can be set to 60°C, preferably 55°C, and more preferably 50°C.

The "glass transition temperature" is the temperature at which the glass transition occurs in the amorphous solid material and is also referred to as "Tg". In a hard candy, the temperature at which the hard candy in the glassy state becomes a rubber state by heating can be considered as the above temperature. The glass transition temperature can be measured by differential scanning calorimetry (DSC), thermomechanical analysis (TMA), etc. Specifically, the specific heat is measured when the sample is changed from 0°C to 80°C at 10°C/min. The intersection of the extension of the specific heat change curve before the specific heat change and the tangent of the specific heat change curve during the specific heat change is referred to as the extrapolated glass transition start temperature, and in the present invention, the extrapolated glass transition start temperature is referred to as the "glass transition point".

The glass transition temperature can be measured by a conventional method. Specifically, the measurement can be performed by a method shown in an example described later.

The hardness of the hard candy of the present invention is preferably 3 kg or more, preferably 5 kg or more. Such physical properties make it possible to obtain good physical properties and texture as a hard candy.

Hardness can be measured by conventional methods using a rheometer. Specifically, the measurement can be performed by a method shown in an example described later.

The hard candy of the present invention may suitably contain a commonly used raw material such as a flavor, a preservative, or the like.

The hard candy of the present invention is preferably a molded article. Examples of the shape include a cube shape, a sphere shape, and the like, and it is preferable that the volume per piece is about 0.5 to 15 cm³, and the weight per piece is 0.65 to 20 g.

The hard candy of the present invention can be produced by boiling an aqueous solution of the above-mentioned raw material under normal pressure or reduced pressure so as to be in the above-mentioned moisture range, mixing it with a raw material for taste and flavor or coloring (flavor, sweetener, acidulant, colorant, etc.) as desired, and then molding it by deposit molding, stamping molding, or the like.

From the viewpoint of handling, the concentration of the aqueous solution is preferably 80% by mass or less. On the other hand, from the viewpoint of boiling efficiency, it is preferable that the content is 50% by mass or more.

In addition, if the water content is too low due to boiling, the dough may become hard or dumpling, which may cause difficulty in the boiling operation or a defect during molding.

### [EXAMPLES]

Hereinafter, the present invention will be described in more detail with reference to examples.

### <Sample preparation>

In accordance with the formulation shown in Table 1 (expressed in parts by mass), various raw materials were taken in a hand pan, and water was added thereto and heated to prepare an aqueous solution having a concentration of 50% and boiled. In the middle of the boiling, the boiled liquid was weighed together with the hand pan, and the boiled liquid was cooled and molded when the moisture value assumed in advance was reached. For molding, plate-like samples having a thickness of 4 mm, a length of 3 cm or more, and a width of 3 cm or more were prepared for hardness measurement, and candy samples having a diameter of 18 mm and a weight of 1 particle of 3 to 3.3 g were prepared for flow test and sensory evaluation by stamping.

### (Moisture)

The moisture content was measured by the conventional method using the atmospheric pressure heating and drying aid method. Sea sand was used as an auxiliary agent.

### (Glass transition temperature)

Differential scanning calorimetry (DSC) was used to measure the specific heat of the samples as they were run from 0°C to 80°C at 10°C /min. The extension of the specific heat change curve before the specific heat change and the intersection point of the tangent line of the specific heat change curve during the specific heat change (extrapolated glass transition start temperature) were defined as the glass transition point.

### (Hardness)

Using a rheometer "CR-500DX" manufactured by Sun science as the instrument, an inverted conical adapter was pressed vertically from above against the surface of a 4 mm thick sample at a measurement temperature of 20°C to measure the maximum load (kg) on the adapter from the start of penetration to a penetration distance of 2 mm when penetrating at a transfer speed of 20 mm/min. Based on the measured values, evaluation points were assigned according to the following criteria. Measurements were performed three times for the same sample and the evaluation points were averaged.

### <5-score evaluation: Hardness evaluation score>

| | |
|---|---|
| 5 | 5 kg or more |
| 4 | 3∼5 kg |
| 3 | 1∼3 kg |
| 2 | less than 1 kg |
| 1 | Non-breaking (high value)** |

| | |
|---|---|
| ** Those that did not break even after penetration of 2 mm were regarded as score 1 even if the maximum load was large. | |

### (Sensory evaluation)

The texture of hard candies molded with a diameter of 18 mm was evaluated by three skilled subjects. Regarding texture, evaluation scores were assigned for dentition and texture when chewing candy according to the following criteria, and evaluation scores by 3 persons were averaged.

### <5-score evaluation: Sensory evaluation score>

| | |
|---|---|
| 5 | Not stick to teeth by bite. |
| 4 | Finely crumbled ones stick to teeth by bite. |
| 3 | Stick to teeth by strong bite. |
| 2 | Deform but not break by bite. Stick to teeth. |
| 1 | Deform immediately in the mouth and stick to the teeth. |

### (Flowing)

The hard candy molded to a diameter of 18 mm was not packaged, and the area of samples was measured after standing for 24 hours in an atmosphere of 32°C and 80% relative humidity. Based on the measured values, the degree of shape collapse was scored according to the following criteria.

### <5-score evaluation: Flow evaluation score>

| | |
|---|---|
| 5 | Less than 300mm² |
| 4 | 300 mm² or more and less than 400 mm² |
| 3 | 400 mm² or more and less than 500 mm² |
| 2 | 500 mm² or more and less than 600 mm² |
| 1 | 600mm² or more |

Evaluation results are given in Table 1.

**[Table 1]**

| | Name of raw material | Comparative Example1 | Comparative Example2 | Comparative Example3 | Example1 | Example2 | Example3 | Example4 | Example5 | Example6 | Example7 | Example8 | Example9 | Example10 | Example11 | Example12 | Example13 |
|---|---|---|---|---|---|---|---|---|---|---|---|---|---|---|---|---|---|
| Formulation | Resistant dextrins (Average molecular weight (2400) | | | | 55 | | | | | | 63.2 | | | 21.1 | | 42.1 | |
| | Polydextrose (Average molecular weight 1500) | | | | 150 | 22 | 22 | 113 | | | | | | 142.9 | | | 171.4 |
| | Inulin (Average molecular weight 3000) | | | | 380 | 300 | 300 | 232 | 189.5 | 210.5 | 147.4 | 177.8 | 210.5 | | 189.5 | 168.4 | |
| | Inulin (Average molecular weight 1800) | | | | | | | | | | | | | 82.5 | | | 82.5 |
| | Fructooligosaccharides (Average molecular weight 700) | | | 300 | | | | | 160 | 133.3 | | | | | 160 | | |
| | Sugar | 165 | 165 | | | | | | | | | 15.5 | | | | | |
| | Starch syrup | 180 | 180 | | | | | | | | | 20.7 | | | | | |
| Water-soluble dietary fiber per solid content(%) | | 0 | 0 | 95 | 90.2 | 93.7 | 93.7 | 89.5 | 94.9 | 94.9 | 93.2 | 80 | 94.7 | 82.5 | 94.9 | 93.7 | 81 |
| Watercontent after boiling (%) | | 6.9 | 2.4 | 7 | 8.7 | 10.5 | 8.6 | 7 | 7.8 | 7.1 | 9.2 | 7.9 | 9.3 | 8 | 6.3 | 6.1 | 6.5 |
| Glass transition temperature Tg(°C) | | 14.7 | 50.9 | 18.7 | 35.8 | 27.2 | 44.6 | 41.6 | 32 | 38.8 | 34.9 | 25.6 | 27,2 | 24.8 | 42.8 | 46.6 | 27.5 |
| Evaluation | Hardness evaluation score | 1 | 5 | 2.33 | 4 | 4.33 | 4.67 | 5 | 5 | 5 | 5 | 5 | 4 | 4.67 | 5 | 5 | 5 |
| | Sensory evaluation score | 2 | 5 | 3.33 | 4.67 | 4 | 4.67 | 5 | 4.33 | 4.33 | 4 | 3.33 | 3.67 | 4 | 5 | 4.33 | 4.67 |
| | Flow evaluation score | 1 | 1 | 1 | 5 | 5 | 5 | 4 | 5 | 5 | 5 | 4 | 5 | 5 | 5 | 5 | 5 |
| | Overall evaluation | × | × | × | ○ | ○ | ○ | ○ | ○ | ○ | ○ | ○ | ○ | ○ | ○ | ○ | ○ |

| | | | | | | | | | | | | | | | | | |
|---|---|---|---|---|---|---|---|---|---|---|---|---|---|---|---|---|---|
| * In the overall evaluation, when the evaluation scores of the hardness, sensory, and flow were all score three or more, "○" was set and when there was at least one less than score three. "×" was set | | | | | | | | | | | | | | | | | |

As can be seen from Table 1, each of the hard candies of the examples had sufficient hardness as a product. Excellent results were also obtained for texture (sensory evaluation score) and stability (flow evaluation score).

On the other hand, the hard candies of Comparative Examples 1 and 2 containing no water-soluble dietary fiber and the hard candy of Comparative Example 3 having a glass transition point of 20°C or less were not good in at least any of stability, texture, and hardness.

From these results, it was found that by setting the content of the water-soluble dietary fiber in the hard candy to 80 to 95% by mass per solid content, setting the moisture to 6 to 11% by mass, and setting the glass transition point to 24 to 47°C, a product excellent in stability and texture in which the sugars were greatly reduced was obtained.

In addition, when the moisture content was 7% by mass or more, the dough was not hardened due to excessive boiling, so that the boiling operation could be easily completed, and a molded product with a beautiful appearance was obtained.

### [INDUSTRIAL APPLICABILITY]

The present invention can be applied to a hard candy which has appealed to sugars off.

## Claims

1. Hard candy satisfying the following (A) to (C):
(A) Containing 80% by mass or more of water-soluble dietary fiber per solid content;
(B) Containing at least 6% by mass of water; and
(C) The glass transition temperature is 20°C or higher.

2. The hard candy of claim 1, wherein the water-soluble dietary fiber comprises at least one member selected from inulin, polydextrose, and resistant dextrins.

3. The hard candy of claim 2, wherein the water-soluble dietary fiber comprises inulin.

4. The hard candy according to any of claims 1 to 3, wherein the hardness of hard candy is 3 kg or more.
